(19) Europäisches Patentamt
European Patent Office
Office européen des brevets

(11) Veröffentlichungsnummer: **0 025 926**
**B1**

(12) # EUROPÄISCHE PATENTSCHRIFT

(45) Veröffentlichungstag der Patentschrift: **24.11.82**

(51) Int. Cl.³: **C 09 B 1/42**, C 09 B 1/516, C 09 B 1/54, C 07 C102/00

(21) Anmeldenummer: **80105353.9**

(22) Anmeldetag: **08.09.80**

(54) **Verfahren zur Herstellung von monoaroylierten 1,4-Diamino-anthrachinonen.**

(30) Priorität: **19.09.79 DE 2937876**

(43) Veröffentlichungstag der Anmeldung: **01.04.81 (Patentblatt 81/13)**

(45) Bekanntmachung des Hinweises auf die Patenterteilung: **24.11.82 Patentblatt 82/47**

(84) Benannte Vertragsstaaten: **CH DE FR GB IT LI**

(56) Entgegenhaltungen:
**FR A 1 162 922**
**FR A 2 143 912**
**US A 1 867 057**
**US A 1 868 124**

(73) Patentinhaber: **BAYER AG**
**Zentralbereich Patente, Marken und Lizenzen**
**D-5090 Leverkusen 1, Bayerwerk (DE)**

(72) Erfinder: **Majer, Norbert, Dr.**
**Waldstrasse 4**
**D-5060 Bergisch-Gladbach 2 (DE)**
Erfinder: **Boehmke, Günther, Dr.**
**Kurt-Schumacher-Ring 152**
**D-5090 Leverkusen (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

EP 0 025 926 B1

Verfahren zur Herstellung von monoaroylierten 1,4-Diaminoanthrachinonen

Die Erfindung betrifft ein Verfahren zur Herstellung von monoaroylierten 1,4-Diaminoanthrachinonen durch Umsetzung von 1,4-Diaminoanthrachinonen mit Aroylhalogeniden.

Es ist bekannt, 4-Amino-1-benzoylaminoanthrachinon durch Umsetzung von 1,4-Diaminoanthrachinon mit Benzoylchlorid in Gegenwart von Nitrobenzol und säurebindenden Mitteln herzustellen (Ullmanns Encyklopädie der technischen Chemie, 4. Auflage, Band 7, S. 596 (1973), US-A 1 867 057 (Beispiel 1), Bios Final Report 1484, S. 4 und 5 Houben-Weyl, Methoden der organischen Chemie, 4. Auflage, Band VI 3c, S. 216 (1979)).

Dabei wird zunächst das eingesetzte Leuko-1,4-diaminoanthrachinon in Nitrobenzol in Gegenwart von Piperidin bzw. Collidin bei Temperaturen um 150 °C oxidiert, wobei als Nebenprodukt in beträchtlichen Mengen Anilin gebildet wird. Bei der anschließenden Benzoylierung entsteht daraus Benzanilid, das vom dem gewünschten 1-Amino-4-benzoylamino-anthrachinon durch aufwendige Trennoperationen abgetrennt werden muß. Benzanilid stört nämlich bei der weiteren Umsetzung von monoaroylierten 1,4-Diaminoanthrachinonen, z.B. zu Farbstoffen.

Ein weiterer Nachteil ist die bei der Aroylierung von 1,4-Diaminoanthrachinon stattfindende Bildung von größeren Mengen an Bisaroylierungsprodukten des 1,4-Diaminoanthrachinons, wodurch die weitere Verarbeitung des monoaroylierten 1,4-Diaminoanthrachinons zu Farbstoffen beeinträchtigt wird.

Es wurde nun ein Verfahren zur Herstellung von monoaroylierten 1,4-Diaminoanthrachinonen durch Umsetzung von 1,4-Diaminoanthrachinonen mit Aroylhalogeniden in Gegenwart von organischen Lösungsmitteln und säurebindenden Mitteln und in Gegenwart von geringen Mengen Wasser bei erhöhter Temperatur gefunden, das dadurch gekennzeichnet ist, daß man die Umsetzung in Gegenwart von tertiären aliphatischen Aminoalkoholen und/oder quartären Ammoniumverbindungen durchführt und die Reaktion zunächst bei 20 bis 50 °C beginnt und nach Zugabe des Aroylhalogenids bei etwa 80 bis etwa 130 °C zu Ende führt.

Als tertiäre aliphatische Aminoalkohole können solche der allgemeinen Formel I

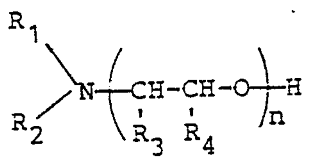

(I)

in der

$R_1$ und $R_2$ gleich oder verschieden sind und für einen gegebenenfalls substituierten $C_{1-4}$ Alkylrest stehen und

$R_3$ und $R_4$ gleich oder verschieden sind und für Wasserstoff oder einen gegebenenfalls substituierten $C_{1-4}$ Alkylrest stehen und

n eine ganze Zahl von 1 bis 3 darstellt,

in das erfindungsgemäße Verfahren eingesetzt werden.

Als gegebenenfalls substituierte Alkylreste kommen für $R_1$ bis $R_4$ solche mit bis zu 4 C-Atomen, bevorzugt bis zu 3 C-Atomen, in Frage, wie Methyl, Ethyl, n-Propyl, iso-Propyl, n-Butyl, iso-Butyl, tert.-Butyl, 2-Hydroxyethyl, 2-Hydroxypropyl, 2-Hydroxylbutyl, bevorzugt Methyl, 2-Hydroxyethyl und 2-Hydroxypropyl.

Zum Beispiel seien als tertiäre aliphatische Aminoalkohole genannt :

Dimethylaminoethanol, Methyldiethanolamin, Diethylaminoethanol, Ethyldiethanolamin, Dipropylaminoethanol, Propyldiethanolamin, Dibutylaminoethanol, Butyldiethanolamin, Dimethyl-, Diethyl-, Dipropyl-, Dibutylaminoisopropanol, Methyl-, Ethyl-, Propyl-, Butyldiisopropanolamin, Dimethyl-, Diethyl-, Dipropyl-, Dibutylaminoisobutanol, Methyl-, Ethyl-, Propyl-, Butyldiisobutanolamin, Triethanolamin, Triisopropanolamin, Dimethylamino-(hydroxyethyl)-ethylether, bevorzugt Methyldiisopropanolamin, Triisopropanolamin, Butyldiethanolamin, Dimethylamino-(hydroxyethyl)-ethylether.

Selbstverständlich ist es auch möglich, die tertiären aliphatischen Aminoalkohole in Form ihrer Salze wie den Hydrochloriden, Sulfaten, Phosphaten oder Acetaten einzusetzen.

Als quartäre Ammoniumverbindungen können solche der allgemeinen Formel II

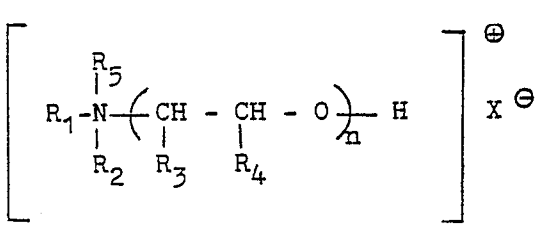

(II)

in der

$R_1$, $R_2$, $R_3$, $R_4$ und $R_5$ gleich oder verschieden sind und die unter Formel (I) für $R_1$ bis $R_4$ angegebene Bedeutung haben und

$X^{\ominus}$ für ein Halogenid-, Cyanid-, Hydrosulfat-, Hydrogenphosphat- oder Hydroxylion steht,

in das erfindungsgemäße Verfahren eingesetzt werden.

Als Halogenidionen seien genannt : das Fluorid-, Chlorid-, Bromidion, bevorzugt das Chloridion.

Zum Beispiel werden als quartäre Ammoniumverbindungen genannt :

Trimethylethanolammoniumhydroxid
Trimethylethanolammoniumchlorid
Trimethylisopropanolammoniumhydroxid
Triethylisopropanolammoniumhydroxid
Dimethyldiethanolammoniumhydroxid
Methyltriethanolammoniumhydroxid
Ethyltriethanolammoniumhydroxid
Ethyltriethanolammoniumchlorid
Propyltriethanolammoniumhydroxid
Butyltriethanolammoniumhydroxid
Trimethylisobutanolammoniumhydroxid.

Bevorzugt seien genannt : Trimethylethanolammoniumhydroxid und Trimethylisopropanolammoniumhydroxid.

Die tertiären aliphatischen Aminoalkohole und/oder quartären Ammoniumverbindungen können in Mengen von ca. 0,01 bis ca. 5 Gew.-%, bevorzugt 0,1 bis 1 Gew.-%, bezogen auf 1,4-Diaminoanthrachinon, eingesetzt werden.

Dabei können die tertiären aliphatischen Aminoalkohole und/oder quartären Ammoniumverbindungen in Form von festen Substanzen oder als wäßrige Lösungen oder Suspensionen dem Reaktionsgemisch zugesetzt werden.

Als 1,4-Diaminoanthrachinone können solche der allgemeinen Formel III

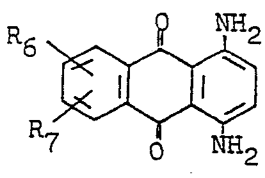

(III)

in der

$R_6$ und $R_7$ gleich oder verschieden sind und für Wasserstoff, Halogen sowie eine Hydroxy-, Nitro-, Acylamino-, Alkyl-, Alkoxy- oder Phenoxygruppe stehen,

in das erfindungsgemäße Verfahren eingesetzt werden.

Als Halogene seien z.B. genannt : Fluor, Chlor, Brom, bevorzugt Chlor.

Als Acylaminoreste seien solche mit bis zu 6 C-Atomen, bevorzugt bis zu 2 C-Atomen, genannt, wie Acetylamino, Propionylamino, Butyrylamino, Benzoylamino, bevorzugt Acetylamino, als Alkylreste solche mit bis zu 10 C-Atomen, bevorzugt bis zu 4 C-Atomen, wie Methyl, Ethyl, n-Propyl, Isopropyl, n-Butyl, Isobutyl, tert.-Butyl, n-Pentyl, iso-Pentyl, n-Octyl, iso-Octyl, bevorzugt Methyl, Ethyl, n-Propyl, n-Butyl, als Arylreste solche mit bis zu 10 C-Atomen, bevorzugt bis zu 6 C-Atomen, wie Phenyl, Naphthyl, bevorzugt Phenyl, als Alkoxyreste solche mit bis zu 4 C-Atomen, bevorzugt bis zu 3 C-Atomen, wie Methoxy, Ethoxy, Propoxy, bevorzugt Methoxy ; als Phenoxyreste solche mit bis zu 10 C-Atomen, bevorzugt bis zu 6 C-Atomen, wie Phenoxy, Methylphenoxy, bevorzugt Phenoxy.

Beispielsweise können folgende 1,4-Diaminoanthrachinone in das erfindungsgemäße Verfahren eingesetzt werden : 1,4-Diaminoanthrachinon, 1,4-Diamino-5-chlor-anthrachinon, 1,4-Diamino-6-chloranthrachinon, 1,4-Diamino-7-chloranthrachinon, 1,4-Diamino-8-chlor-anthrachinon, 1,4-Diamino-5,8-dichloranthrachinon, 1,4-Diamino-6,7-dichloranthrachinon, 1,4-Diamino-6,7-dimethoxyanthrachinon, 1,4-Diamino-5,8-dimethoxyanthrachinon, 1,4-Diamino-5-nitroanthrachinon, 1,4-Diamino-6-nitroanthrachinon, 1,4-Diamino-7-nitroanthrachinon, 1,4-Diamino-8-nitroanthrachinon, 1,4-Diamino-6,7-dinitroanthrachinon, 1,4-Diamino-5,8-dinitroanthrachinon, bevorzugt 1,4-Diaminoanthrachinon.

Als Aroylhalogenide können solche der allgemeinen Formel V

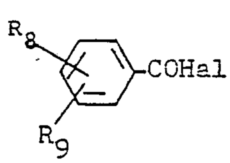

(V)

in der

$R_8$ und $R_9$ gleich oder verschieden sind und die in Formel III für $R_6$ und $R_7$ angegebene Bedeutung

haben und

Hal für Chlor, Brom, bevorzugt Chlor, steht,

in das erfindungsgemäße Verfahren eingesetzt werden.

Beispielsweise können folgende Aroylhalogenide in das erfindungsgemäße Verfahren eingesetzt werden :

Benzoylchlorid, 2-Chlorbenzoylchlorid, 3-Chlorbenzoylchlorid, 4-Chlorbenzoylchlorid, 2,4-Dichlorbenzoylchlorid, 3,5-Dichlorbenzoylchlorid, 2-Methylbenzoylchlorid, 3-Methylbenzoylchlorid, 4-Methylbenzoylchlorid, 2,4-Dimethylbenzoylchlorid, 3,5-Dimethylbenzoylchlorid, 2-Methoxybenzoylchlorid, 3-Methoxybenzoylchlorid, 4-Methoxybenzoylchlorid, 2,4-Dimethoxybenzoylchlorid, 3,5-Dimethoxybenzoylchlorid, bevorzugt Benzoylchlorid, 4-Chlorbenzoylchlorid, 4-Methylbenzoylchlorid, 4-Methoxybenzoylchlorid, 2-Chlorbenzoylchlorid, 3-Chlorbenzoylchlorid.

Selbstverständlich können auch die entsprechenden Säurebromide eingesetzt werden.

Als säurebindende Mittel können eingesetzt werden : Alkali- und/oder Erdalkalicarbonate und/oder deren Hydrogencarbonate sowie die Erdalkalihydroxide.

Zum Beispiel seien genannt : Natriumcarbonat, Kaliumcarbonat, Calciumcarbonat, Natriumhydrogencarbonat, Kaliumhydrogencarbonat, Magnesiumoxid, Calciumoxid, Calciumhydroxid, bevorzugt Natriumcarbonat.

Die säurebindenden Mittel können in Mengen von etwa 30 bis 60 Gew.-%, bevorzugt 45 bis 35 Gew.-%, bezogen auf entsprechende 1,4-Diaminoanthrachinon eingesetzt werden.

Als organische Lösungsmittel, die in das erfindungsgemäße Verfahren eingesetzt werden können, seien genannt : Nitrobenzol, Chlorbenzol, Xylol, Dichlorbenzole, Sulfone bevorzugt Nitrobenzol.

Die für das erfindungsgemäße Verfahren güngstigen Mengen an organischen Lösungsmitteln können leicht durch Vorversuche ermittelt werden.

Die erfindungsgemäße Umsetzung kann im Temperaturbereich von etwa 20 bis etwa 130 °C, vorzugsweise bei etwa 30 bis 100 °C durchgeführt werden, wobei man die Reaktion zunächst bei 20 bis 50 °C, bevorzugt 30 bis 40 °C, beginnt und nach Zugabe des Aroylhalogenids bei Temperaturen, im Bereich von etwa 80 bis 130 °C, bevorzugt 90 bis 100 °C, zu Ende führt.

Man arbeitet im allgemeinen bei Normaldruck. Es ist jedoch auch möglich bei geringem Unterdruck oder Überdruck zu arbeiten. Zum Beispiel kann man bei einem Unterdruck im Bereich von 0,5 bis 0,7 bar oder bei einem Überdruck im Bereich von 1 bis 3 bar die Umsetzung durchführen.

Die erfindungsgemäße Umsetzung wird in Gegenwart von geringen Mengen Wasser durchgeführt. Dabei werden dem Reaktionsgemisch etwa 1 bis 10 Gew.-% Wasser, bezogen auf 1,4-Diaminoanthrachinon, zugegeben. Bevorzugt werden 3 bis 5 Gew.-% Wasser zugesetzt. Selbstverständlich kann der entsprechende Wassergehalt auch durch Einsatz wasserhaltiger technischer organischer Lösungsmittel oder wasserhaltiger säurebindender Mittel eingestellt werden.

In einer bevorzugten Ausführungsform des erfindungsgemäßen Verfahrens beginnt man die Umsetzung bei etwa 20 °C, setzt bei 30-40 °C das Aroylhalogenid zu, heizt in 2-4 Stunden auf etwa 100 °C und beendet die Reaktion nach der Zugabe des Aroylhalogenids bei einer Temperatur von etwa 100-130 °C. Gegebenenfalls gibt man zur Vervollständigung der Reaktion bei dieser Temperatur noch etwas Aroylhalogenid dem Reaktionsgemisch hinzu. Die Reaktion ist beendet, sobald sich das eingesetzte 1,4-Diaminoanthrachinon nur noch in Spuren (< 0,5 %) chromatographisch nachweisen läßt. Die Reaktion wird durch Zusatz von Wasser abgestoppt, um überschüssiges Aroylhalogenid zu zersetzen.

Das erfindungsgemäße Verfahren kann sowohl kontinuierlich als auch diskontinuierlich durchgeführt werden.

Die Vorteile des erfindungsgemäßen Verfahrens liegen in der einfachen Durchführung der Reaktion. Es entfallen aufwendige Reinigungs- und Trennoperationen und damit die bei der Aufarbeitung der Mutterlaugen entstehenden Abluft- und Abwasserprobleme. Bei dem erfindungsgemäßen Verfahren werden nur geringe Mengen organische Lösungsmittel gebraucht, wobei es möglich ist, die abdestillierten organischen Lösungsmittel ohne weitere Reinigung wieder für weitere Umsetzungen zu verwenden.

Weiterhin war es außerordentlich überraschend, daß bei dem erfindungsgemäßen Verfahren durch Zusatz von tertiären aliphatischen Aminoalkoholen und/oder quartären Ammoniumverbindungen die Reaktion so gesteuert werden konnte, daß nur geringe Mengen an unerwünschten Nebenprodukten entstehen, so daß das monoaroylierte 1,4-Diaminoanthrachinon ohne weitere Reinigung zu beispielsweise Küpenfarbstoffen umgesetzt werden kann (Ullmanns Encyklopädie der technischen Chemie, 4. Auflage, Bd. 7, S 622 (1973), Bios 1493, S. 23).

Das erfindungsgemäße Verfahren sei durch die nachfolgenden Beispiele erläutert ohne es jedoch auf die Beispiele einzuschränken.

## Beispiel 1

In 250 ml Nitrobenzol werden 30 g 1,4-Diaminoanthrachinon (91 %ig), 14 g Natriumcarbonat und 0,2 g Trimethylethanolammoniumhydroxid (60 %ige wäßrige Lösung) eingetragen, gut vermischt, 0,9 ml

Wasser zugesetzt und auf 35 bis 40 °C erhitzt. Im Verlaufe von 3 Stunden werden 16 ml Benzoylchlorid zugetropft, danach in 2 bis 3 Stunden auf 100 °C geheizt und portionsweise bis 6 ml Benzoylchlorid zusätzlich zugesetzt. Die Reaktion ist beendet sobald dünnschichtchromatographisch die Ausgangsverbindung nur noch in Spuren (< 0,5 %) sichtbar ist und sich Spuren (< 2 %) des Bisbenzoylierungsproduktes bilden. Jetzt wird 1 ml Wasser zugesetzt. Das Nitrobenzol wird anschließend im Vakuum abdestilliert. Man erhält 65 g eines Produktes (94,5 % der Theorie) mit einem Gehalt von 58 % 1-Amino-4-benzoylaminoanthrachinon, 0,4 % 1,4-Diaminoanthrachinon, 1,5 % 1,4-Bisbenzoylaminoanthrachinon. Der Rest besteht aus Salzen wie Natriumchlorid, Natriumbenzoat.

Das erhaltene Produkt kann ohne weitere Reinigung zur Herstellung zahlreicher Küpenfarbstoffe eingesetzt werden (vgl. z.B. Ullmanns Encyclopädie der technischen Chemie, 4. Auflage, Bd. 7, S. 622 (1973), Bios 1493, S. 23).

Benötigt man eine reinere Qualität, so werden 65 g des erhaltenen Rohproduktes in der zehnfachen Menge heißer 5 %iger Salzsäure 1 Stunde verrührt, abgesaugt, mit 50 ml heißer 5 %iger Slazsäure nachgewaschen, mit heißem Wasser neutral gewaschen und getrocknet.

Man erhält 42,3 g (94 % der Theorie) eines Produktes folgender Zusammensetzung :

87 % 1-Amino-4-benzoylaminoanthrachinon, 2,7 % 1,4-Bisbenzoylaminoanthrachinon, 0,8 % 1,4-Diaminoanthrachinon.

Der Rest besteht aus anorganischen und organischen Salzen.

Vergleichsbeispiel

Unter den in Beispiel 1 angegebenen Reaktionsbedingungen werden 30 g 1,4-Diaminoanthrachinon (91 %ig) mit 22 ml Benzoylchlorid in 210 ml Nitrobenzol umgesetzt. Im Gegensatz zu Beispiel 1 wurde die Umsetzung aber nicht in Gegenwart von Trimethylethanolammoniumhydroxid durchgeführt.

Man erhielt 64,5 g eines Produktes (47 % der Theorie) mit einem Gehalt von 28,5 % 1-Amino-4-benzoylaminoanthrachinon, 0,4 % 1,4-Diaminoanthrachinon, 30 % 1,4-Bis-benzoylaminoanthrachinon.

Das Vergleichsbeispiel zeigt, daß ohne Zusatz von Trimethylethanolammoniumhydroxid in größeren Mengen das Bisbenzoylierungsprodukt gebildet wird und das gewünschte 1-Amino-4-benzoylaminoanthrachinon nur in geringen Mengen entsteht.

Die Beispiele 2 bis 11 wurden unter den in Beispiel 1 angegebenen Reaktionsbedingungen und mit den dort angegebenen Mengen an 1,4-Diaminoanthrachinon und Nitrobenzol durchgeführt.

| Bsp. | Säurechlorid | Menge (ml) | Kat. | Kat. Menge (g) | Ausb. (g) | Bisbenzoylierungs-produkt (%) |
|---|---|---|---|---|---|---|
| 2 | Benzoylchlorid | 22 | 2) | 0,4 | 63,7 | 4 |
| 3 | Benzoylchlorid | 22 | 3) | 0,2 | 65,1 | 2 |
| 4 | Benzoylchlorid | 21 | 4) | 0,2 | 63,5 | 8 |
| 5 | Benzoylchlorid | 21 | 5) | 0,2 | 62,5 | 3 |
| 6 | 2-Chlor-benzoylchlorid | 27 | 1) | 0,2 | 67,0 | 4-5 |
| 7 | 3-Chlor-benzoylchlorid | 22 | 1) | 0,2 | 65,0 | 3-4 |
| 8 | 4-Chlor-benzoylchlorid | 21 | 1) | 0,2 | 67,0 | 3-5 |
| 9 | 3-Methylbenzoylchlorid | 20 | 1) | 0,2 | 61,0 | 6-8 |
| 10 | 4-Methylbenzoylchlorid | 21 | 1) | 0,2 | 64,0 | 3-5 |
| 11 | 4-Methoxybenzoylchlorid | 22 | 1) | 0,2 | 65,0 | 2-5 |

1) Trimethylethanolammoniumhydroxid
2) Trimethylethanolammoniumchlorid
3) Triisopropanolamin
4) Umsetzungsprodukt von Ammoniak mit 6 Mol Ethylenoxid in Gegenwart von 1 Mol Wasser
5) Methyltriethanolammoniumhydroxid

**Ansprüche**

1. Verfahren zur Herstellung von monoaroylierten 1,4-Diaminoanthrachinonen durch Umsetzung von 1,4-Diaminoanthrachinonen mit Aroylhahogeniden in Gegenwart von organischen Lösungsmitteln und säurebindenden Mitteln und in Gegenwart von geringen Mengen Wasser bei erhöhter Temperatur, dadurch gekennzeichnet, daß man die Umsetzung in Gegenwart von tertiären aliphatischen Aminoalkoholen und/oder quartären Ammoniumverbindungen durchgeführt, die Reaktion zunächst bei 20 bis 50 °C beginnt und nach Zugabe des Aroylhalogenids bei 80 bis 130 °C zu Ende führt.

2. Verfahren nach Anspruch 1, dadurch gekennzeichnet, daß man als tertiäre aliphatische Aminoalkohole solche der Formel I

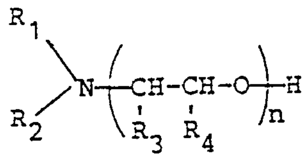

(I)

in der

$R_1$ und $R_2$ gleich oder verschieden sind und für einen gegebenenfalls substituierten $C_{1-4}$ Alkylrest stehen und

$R_3$ und $R_4$ gleich oder verschieden sind und für Wasserstoff oder einen gegebenenfalls substituierten $C_{1-4}$ Alkylrest stehen und

n eine ganze Zahl von 1 bis 3 darstellt, einsetzt.

3. Verfahren nach Ansprüchen 1 und 2, dadurch gekennzeichnet, daß man als tertiäre aliphatische Aminoalkohole Methyldiisopropanolamin, Triisopropanolamin, Butyldiethanolamin, Dimethylamino-(hydroxyethyl)-ethylether einsetzt.

4. Verfahren nach Anspruch 1, dadurch gekennzeichnet, daß man als quartäre Ammoniumverbindungen solche der Formel II

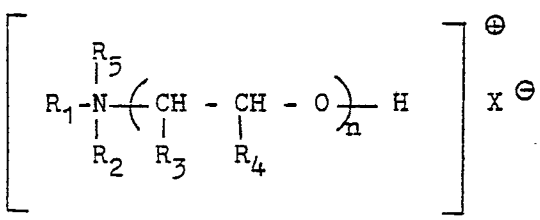

(II)

in der

$R_1$, $R_2$, $R_3$, $R_4$ und $R_5$ gleich oder verschieden sind und die unter Formel (I) fur $R_1$ bis $R_4$ angegebene Bedeutung haben und

$X^{\ominus}$ für ein Halogenid-, Cyanid-, Hydrosulfat-, Hydrogenphosphat-, Hydroxylion steht, einsetzt.

5. Verfahren nach Ansprüchen 1 und 4, dadurch gekennzeichnet, daß man Trimethylethanolammoniumhydroxid und Trimethylisopropanolammoniumhydroxid einsetzt.

6. Verfahren nach Ansprüchen 1 bis 5, dadurch gekennzeichnet, daß man die tertiären aliphatischen Aminoalkohole und/oder quartären Ammoniumverbindungen in Mengen von 0,01 bis 5 Gew.-%, bezogen auf 1,4-Diaminoanthrachinon einsetzt.

**Claims**

1. Process for the preparation of monoaroylated 1,4-diaminoanthraquinones by reacting 1,4-diaminoanthraquinones with aroyl halides in the presence of organic solvents and acid-binding agents and in the presence of small amounts of water at elevated temperature, characterised in that the reaction is carried out in the presence of tertiary aliphatic aminoalcohols and/or quaternary ammonium compounds, the reaction is first started at 20 to 50 °C and, after addition of the aroyl halide, is brought to completion at 80 to 130 °C.

2. Process according to Claim 1, characterised in that the tertiary aliphatic aminoalcohols used are those of the formula I

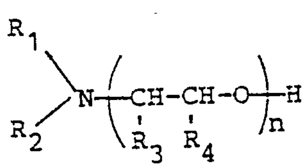

(I)

in which

$R_1$ and $R_2$ are identical or different and represent an optionally substituted $C_1$-$C_4$-alkyl radical and

$R_3$ and $R_4$ are identical or different and represent hydrogen or an optionally substituted $C_1$-$C_4$-alkyl radical and

n denotes an integer from 1 to 3.

3. Process according to Claims 1 and 2, characterised in that methyldiisopropanolamine, triisopropanolamine, butyldiethanolamine or dimethylaminoethyl hydroxyethyl ether is used as the tertiary aliphatic aminoalcohol.

4. Process according to Claim 1, characterised in that the quaternary ammonium compounds used are those of the formula II

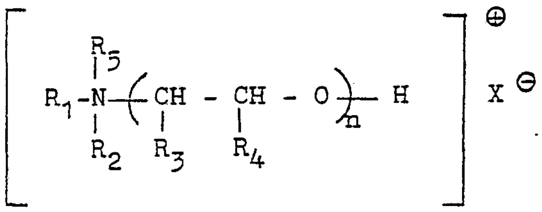

(II)

in which

$R_1$, $R_2$, $R_3$, $R_4$ and $R_5$ are identical or different and have the meaning indicated for $R_1$ to $R_4$ under formula (I) and

$X^{\ominus}$ represents a halide, cyanide, hydrosulphate, hydrogen phosphate or hydroxyl ion.

5. Process according to Claims 1 and 4, characterised in that trimethylethanolammonium hydroxide and trimethylisopropanolammonium hydroxide are used.

6. Process according to Claims 1 to 5, characterised in that the tertiary aliphatic aminoalcohols and/or quaternary ammonium compounds are used in amounts of 0.01 to 5 % by weight, relative to the 1,4-diaminoanthraquinone.

**Revendications**

1. Procédé de préparation de 1,4-diaminoanthraquinones monoaroylées par réaction de 1,4-diaminoanthraquinones avec des halogénures d'aroyle en présence de solvants organiques et d'agents fixant les acides et en présence de petites quantités d'eau à température élevée, caractérisé en ce que l'on effectue la réaction en présence d'aminoalcools aliphatiques tertiaires et/ou de composés d'ammonium quaternaire, on commence d'abord la réaction à une température de 20 à 50 °C et, après addition de l'halogénure d'aroyle, on la termine à une température de 80 à 130 °C.

2. Procédé selon la revendication 1, caractérisé en ce que l'on utilise en tant qu'aminoalcools aliphatiques tertiaires les composés de formule I

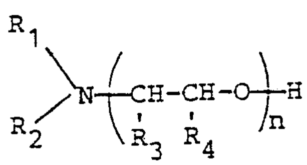

(I)

dans laquelle

$R_1$ et $R_2$, identiques ou différents, représentent un groupe alkyle en $C_1$-$C_4$ éventuellement substitué et

$R_3$ et $R_4$, identiques ou différents, représentent l'hydrogène ou un groupe alkyle en $C_1$-$C_4$ éventuellement substitué, et

n est un nombre entier de 1 à 3.

3. Procédé selon les revendications 1 et 2, caractérisé en ce que l'on utilise en tant qu'aminoalcools aliphatiques tertiaires la méthyldiisopropanolamine, la triisopropanolamine, la butyldiéthanolamine, l'éther diméthylamino-(hydroxyéthyl)-éthylique.

4. Procédé selon la revendication 1, caractérisé en ce que l'on utilise en tant que composés d'ammonium quaternaire les composés de formule II

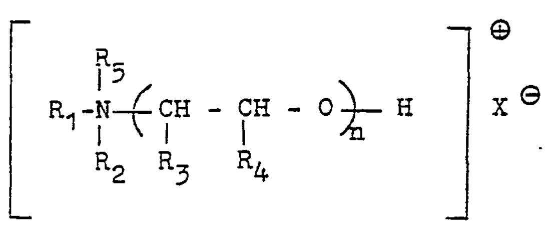

(II)

dans laquelle

$R_1$, $R_2$, $R_3$, $R_4$ et $R_5$, identiques ou différents, ont la signification indiquée pour $R_1$ à $R_4$ en référence à la formule I et

$X^{\ominus}$ représente un ion halogénure, cyanure, hydrosulfate, hydrogénophosphate, hydroxyle.

5. Procédé selon les revendications 1 et 4, caractérisé en ce que l'on utilise l'hydroxyde de triméthyléthanolammonium et l'hydroxyde de triméthylisopropanolammonium.

6. Procédé selon les revendications 1 à 5, caractérisé en ce que l'on utilise les aminoalcools aliphatiques tertiaires et/ou les composés d'ammonium quaternaire en quantité de 0,01 à 5 % en poids par rapport à la 1,4-diaminoanthraquinone.